# EUROPEAN PATENT APPLICATION

(11) **EP 4 819 452 A1**
(43) Date of publication of application: **07.10.2026**
(21) Application number: 25182201.1
(22) Date of filing: 12.06.2025
(51) Int. Cl.: H02K 3/52, H02K 3/50, H02K 7/14

(54) **ELECTRIC MOTOR AND POWER TOOL**

(30) Priority: 02.04.2025 CN 202520607493 U; 02.04.2025 CN 202520608523 U; 11.04.2025 CN 202520688103 U
(71) Applicant: Nanjing Chervon Industry Co., Ltd., Nanjing, Jiangsu 211106 (CN)
(72) Inventor: SHI, Guoliang, Nanjing, Jiangsu 211106 (CN); LI, Jiayu, Nanjing, Jiangsu 211106 (CN); TONG, Guoming, Nanjing, Jiangsu 211106 (CN); ZHANG, Yangqing, Nanjing, Jiangsu 211106 (CN)
(74) Representative: Sun, Yiming

(57) **Abstract**

An electric motor includes: a rotor including a rotor core; a stator including a stator core, where the stator core includes a core ring and multiple stator teeth extending radially toward the inner side of the core ring; and insulating end covers disposed at two ends of the stator core, where the insulating end cover includes an annular body and multiple terminal teeth, the multiple terminal teeth extend radially toward the inner side of the annular body, and the terminal tooth has a tooth surface around which the coil is wound. The tooth surface protrudes axially to form at least a partially arc-shaped surface. At least part of the tooth surface is configured to be an inclined surface along a radial direction. The arc-shaped surface and the inclined surface are provided so that the first layer of coils can be better fixed, thereby ensuring that the subsequent coils do not slip. In this manner, the coils of the coil winding can be arranged tightly during winding.

## Description

### TECHNICAL FIELD

The present application relates to an electric motor and, in particular, to an electric motor applicable to a power tool.

### BACKGROUND

In power tools, an electric motor is always included. The electric motor is used for driving a working portion of the power tool to work. However, for the existing electric motor, when the power tool is in operation, the electric motor generates a highfrequency squealing sound, which is relatively large noise affecting the user's usage. Especially for a sanding tool, the operator is more sensitive to the noise from the tool. For example, when a polisher is polishing a car, a ship, or the like, the workplace is often indoors, and the operator is more sensitive to the squealing sound of the electric motor at a high rotational speed.

This part provides background information related to the present application, and the background information is not necessarily the existing art.

### SUMMARY

An object of the present application is to solve or at least alleviate part or all of the preceding problems. Therefore, an object of the present application is to provide an electric motor and a power tool.

To achieve the preceding object, the present application adopts the technical solutions below.

An electric motor includes: a rotor including a rotor core; a stator including a stator core, where the stator core includes a core ring and multiple stator teeth extending radially toward the inner side of the core ring; a coil winding configured to be wound around the multiple stator teeth; and fillers, each of which is disposed at least between adjacent stator teeth. The natural frequency of the stator core in which the fillers are provided increases by at least 10% compared with the natural frequency of the stator core in which the fillers are not provided.

In some examples, the multiple stator teeth are spaced apart from each other and arranged circumferentially about the central axis on the inner side of the core ring, a stator tooth of the multiple stator teeth includes a body portion and a pair of extension portions, and the tip of each of the pair of extension portions is circumferentially away from the body portion and faces a stator tooth adjacent to the stator tooth.

In some examples, a gap between two adjacent extension portions is at least partially filled with the filler.

In some examples, the electric motor further includes insulating end covers, where the insulating end cover includes an annular body and multiple terminal teeth, the multiple terminal teeth extend radially toward the inner side of the annular body and are in one-to-one correspondence with the multiple stator teeth, a terminal tooth of the multiple terminal teeth includes a tooth surface around which the coil is wound and a tooth end, and tooth ends are arranged circumferentially.

In some examples, a gap between two adjacent tooth ends is at least partially filled with the filler.

In some examples, the filler is made of nylon with fiber, the bulk molding compound (BMC), polycarbonate (PC), acrylonitrile butadiene styrene (ABS), AB glue, the aluminum alloy, or steel.

An electric motor includes: a rotor including a rotor core; a stator including a stator core, where the stator core includes a core ring and multiple stator teeth extending radially toward the inner side of the core ring; and a coil winding configured to be wound around the multiple stator teeth. A continuous wall surface exists on the inner side of the stator core. The natural frequency of the stator core on the inner side of which the continuous wall surface exists increases by at least 10% compared with the natural frequency of the stator core on the inner side of which no continuous wall surface exists.

In some examples, the multiple stator teeth are spaced apart from each other and arranged circumferentially about the central axis on the inner side of the core ring, a stator tooth of the multiple stator teeth includes a body portion and a pair of extension portions, and the tip of each of the pair of extension portions is circumferentially away from the body portion and faces a stator tooth adjacent to the stator tooth.

In some examples, a gap between two adjacent extension portions is at least partially filled with a filler, and the filler and the two adjacent extension portions form the continuous wall surface.

In some examples, the electric motor further includes filling members, where the filling members are adjacent to the inner side of the stator core.

An electric motor includes: a rotor including a rotor core; a stator including a stator core, where the stator core includes a core ring and multiple stator teeth extending radially toward the inner side of the core ring; a coil winding configured to be wound around the multiple stator teeth; fillers, each of which is disposed at least between adjacent stator teeth; and a press fitting disposed on the outer circumference of the stator core to apply a fastening force to the stator core.

An electric motor includes: a rotor including a rotor core; a stator including a stator core, where the stator core includes a core ring and multiple stator teeth extending radially toward the inner side of the core ring; a coil winding configured to be wound around the multiple stator teeth; insulating end covers disposed at two ends of the stator core and made of a first material; and fillers, each of which is disposed at least between adjacent stator teeth and made of a second material. The modulus of the first material is less than the modulus of the second material.

In some examples, the multiple stator teeth are spaced apart from each other and arranged circumferentially about the central axis on the inner side of the core ring, a stator tooth of the multiple stator teeth includes a body portion and a pair of extension portions, and the tip of each of the pair of extension portions is circumferentially away from the body portion and faces a stator tooth adjacent to the stator tooth.

In some examples, a gap between two adjacent extension portions is at least partially filled with the filler.

In some examples, the electric motor further includes insulating end covers, where the insulating end cover includes an annular body and multiple terminal teeth, the multiple terminal teeth extend radially toward the inner side of the annular body and are in one-to-one correspondence with the multiple stator teeth, a terminal tooth of the multiple terminal teeth includes a tooth surface around which the coil is wound and a tooth end, and tooth ends are arranged circumferentially.

In some examples, a gap between two adjacent tooth ends is at least partially filled with the filler.

In some examples, the moisture absorption rate of the second material is less than the moisture absorption rate of the first material.

In some examples, the density of the second material is different from the density of the first material.

An electric motor includes: a rotor including a rotor core; a stator including a stator core, where the stator core includes a core ring and multiple stator teeth extending radially toward the inner side of the core ring; a coil winding configured to be wound around the multiple stator teeth; insulating end covers disposed at two ends of the stator core; and fillers, each of which is disposed at least between adjacent stator teeth. The material of the fillers is different from the material of the insulating end covers.

In some examples, the multiple stator teeth are spaced apart from each other and arranged circumferentially about the central axis on the inner side of the core ring, a stator tooth of the multiple stator teeth includes a body portion and a pair of extension portions, and the tip of each of the pair of extension portions is circumferentially away from the body portion and faces a stator tooth adjacent to the stator tooth.

In some examples, a gap between two adjacent extension portions is at least partially filled with a filler, and the filler and the two adjacent extension portions form the continuous wall surface.

In some examples, the electric motor further includes filling members, where the filling members are adjacent to the inner side of the stator core.

In some examples, the moisture absorption rate of the fillers is less than the moisture absorption rate of the insulating end covers.

In some examples, the density of the fillers is different from the density of the insulating end covers.

In some examples, the modulus of the fillers is different from the modulus of the insulating end covers.

In some examples, the fluidity of the melt filler is less than the fluidity of the melt insulating end cover.

An electric motor includes: a rotor including a rotor core; a stator including a stator core, where the stator core includes a core ring and multiple stator teeth extending radially toward the inner side of the core ring; and insulating end covers disposed at two ends of the stator core, where the insulating end cover includes an annular body and multiple terminal teeth, the multiple terminal teeth extend radially toward the inner side of the annular body, and the terminal tooth has a tooth surface around which the coil is wound. The tooth surface protrudes axially to form at least a partially arc-shaped surface. At least part of the tooth surface is configured to be an inclined surface along a radial direction.

In some examples, at least part of the tooth surface is configured to be a rough surface.

In some examples, the rough surface includes at least one of a groove with a grooving direction consistent with a coil winding direction, multiple regular or irregular protrusions, a mesh-like groove, and multiple ridges extending in a direction basically consistent with the coil winding direction.

In some examples, the roughness Ra of the rough surface is less than or equal to 3.2 µm.

In some examples, the height of the protrusion of the arc-shaped surface is greater than or equal to 0.2 mm.

In some examples, the angle of inclination of the inclined surface is greater than or equal to 2° and less than or equal to 45°.

An electric motor includes: a rotor including a rotor core; a stator including a stator core, where the stator core includes a core ring and multiple stator teeth extending radially toward the inner side of the core ring; and insulating end covers disposed at two ends of the stator core, where the insulating end cover includes an annular body and multiple terminal teeth, the multiple terminal teeth extend radially toward the inner side of the annular body, and the terminal tooth has a tooth surface around which the coil is wound. At least part of the tooth surface is configured to be an inclined surface along a radial direction. The roughness Ra of the tooth surface is less than or equal to 3.2 µm.

In some examples, the rough surface includes at least one of a groove with a grooving direction consistent with a coil winding direction, multiple regular or irregular protrusions, a mesh-like groove, and multiple ridges extending in a direction basically consistent with the coil winding direction.

In some examples, the angle of inclination of the inclined surface is greater than or equal to 2° and less than or equal to 45°.

An electric motor includes: a rotor including a rotor core; a stator including a stator core, where the stator core includes a core ring and multiple stator teeth extending radially toward the inner side of the core ring; and insulating end covers disposed at two ends of the stator core, where the insulating end cover includes an annular body and multiple terminal teeth, the multiple terminal teeth extend radially toward the inner side of the annular body, and the terminal tooth has a tooth surface around which the coil is wound. The roughness Ra of the tooth surface is greater than 3.2 µm.

In some examples, at least part of the tooth surface (3121) is configured to be an inclined surface along a radial direction.

In some examples, the angle of inclination of the inclined surface is greater than or equal to 2° and less than or equal to 45°.

In some examples, the tooth surface (3121) protrudes axially to form at least a partially arc-shaped surface.

In some examples, the height of the protrusion of the arc-shaped surface is greater than or equal to 0.2 mm.

In some examples, the rough surface includes at least one of a groove with a grooving direction consistent with a coil winding direction, multiple regular or irregular protrusions, a mesh-like groove, and multiple ridges extending in a direction basically consistent with the coil winding direction.

A power tool includes a housing, a working portion, and the electric motor described in any one of the preceding solutions, and the electric motor is disposed in the housing and can drive the working portion to work.

### BRIEF DESCRIPTION OF DRAWINGS

FIG. 1 is a structural view of an electric motor in which no press fitting is provided and fillers are independently provided according to an example of the present utility model.
FIG. 2 is a sectional view of FIG. 1.
FIG. 3 is an exploded view of FIG. 1.
FIG. 4 is a structural view of an electric motor in which no press fitting is provided and fillers are integrally provided according to an example of the present utility model.
FIG. 5 is a sectional view of FIG. 4.
FIG. 6 is an exploded view of FIG. 4.
FIG. 7 is a structural view of an electric motor in which a press fitting is provided and fillers are independently provided according to an example of the present utility model.
FIG. 8 is a sectional view of FIG. 7.
FIG. 9 is an exploded view of FIG. 7.
FIG. 10 is a structural view of an electric motor in which a press fitting is provided and fillers are integrally provided according to an example of the present utility model.
FIG. 11 is a sectional view of FIG. 10.
FIG. 12 is an exploded view of FIG. 10.
FIG. 13 is a structural view of an electric motor in which a press fitting is provided and no filler is provided according to an example of the present utility model.
FIG. 14 is a sectional view of FIG. 13.
FIG. 15 is an exploded view of FIG. 13.
FIG. 16 is a sectional view of an insulating assembly involved in an example of the present utility model along a first direction.
FIG. 17 is a sectional view of an insulating assembly involved in an example of the present utility model along a second direction.
FIG. 18 is a top view of an insulating assembly involved in an example of the present utility model when a tooth surface is in a first structural form.
FIG. 19 is a top view of an insulating assembly involved in an example of the present utility model when a tooth surface is in a second structural form.
FIG. 20 is a top view of an insulating assembly involved in an example of the present utility model when a tooth surface is in a third structural form.
FIG. 21 is a structural view of each segment of a segmented stator motor according to an example of the present utility model.
FIG. 22 is a top view of some structures of a segmented stator motor according to an example of the present utility model.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present utility model provides a power tool. Specifically, the power tool may be a handheld tool. More specifically, the power tool is a polisher. Of course, it is to be understood that the power tool may be a handheld power tool, for example, a drill, a hedge trimmer, or a sander. Alternatively, the power tool may be a table tool, for example, a table saw or a miter saw. Alternatively, the power tool may be a push power tool, for example, a push mower or a push snow thrower. Alternatively, the power tool may be an outdoor wheeled tool, an outdoor electric vehicle, or the like. Alternatively, the power tool may be a riding power tool, for example, a riding mower, a riding vehicle, or an all-terrain vehicle. Alternatively, the power tool may be a robotic tool, for example, a robotic mower or a robotic snow thrower. In some examples, the power tool may be an electric drill, an electric lamp, an electric vehicle, or the like. In some examples, the power tool may be a garden tool, for example, a hedge trimmer, a blower, a mower, or a chainsaw. Alternatively, the power tool may be a decorating tool, for example, a screwdriver, a nail gun, a circular saw, or a sander. In some examples, the power tool may be a vegetation care tool, for example, a string trimmer, a mower, a hedge trimmer, or a chainsaw. Alternatively, the power tool may be a cleaning tool, for example, a blower, a snow thrower, or a cleaning machine. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a sanding tool, for example, an angle grinder or a sander. Alternatively, the power tool may be another tool, for example, a fan. Any other power tools that may use the electric motor protected in the present application are within the scope of the present application.

The power tool specifically includes a housing, an electric motor, and a working portion. The electric motor is disposed in the housing and used for driving the working portion to work. In this example, the power tool is a polisher, the working portion may specifically be a polishing disc, and the electric motor is used for driving the polishing disc to rotate.

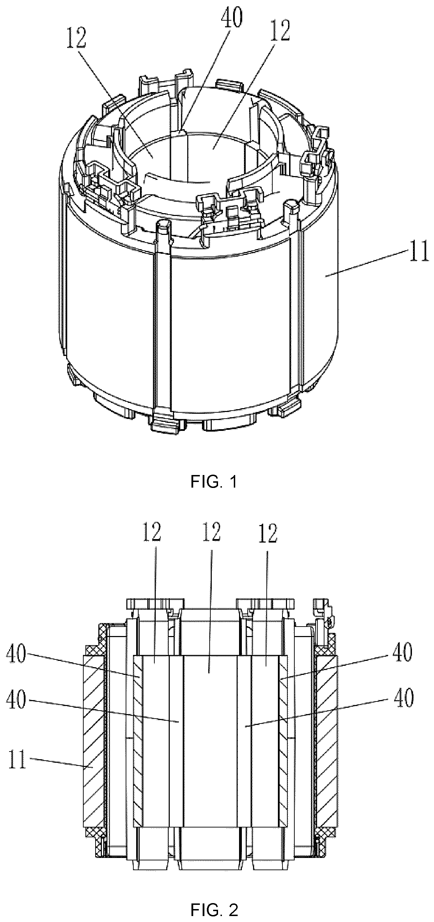

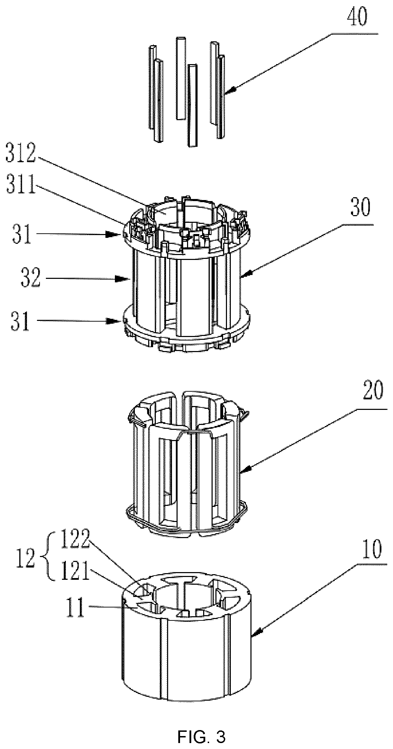

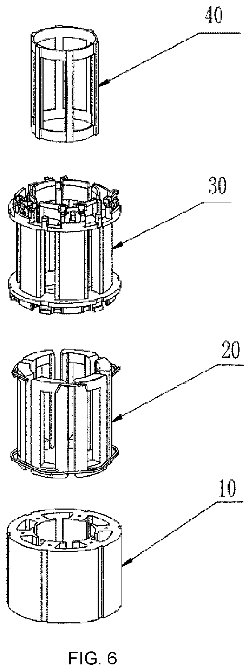

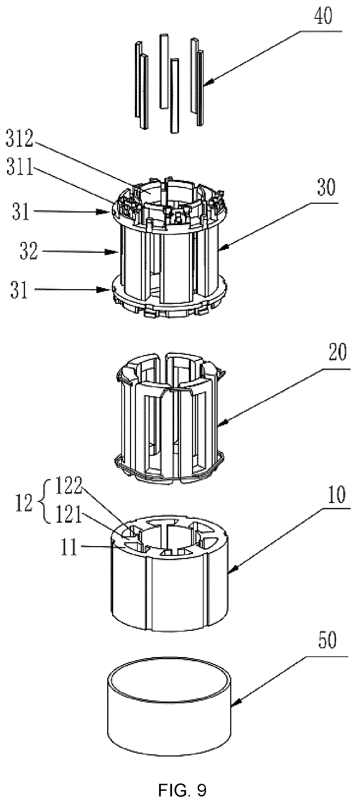

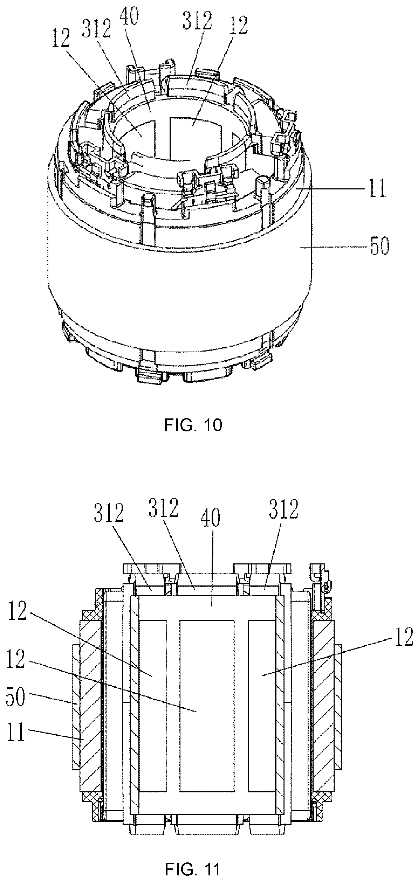

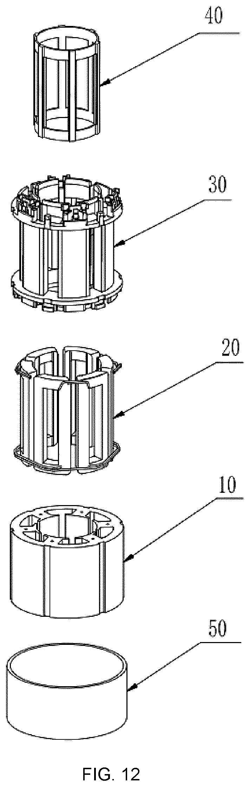

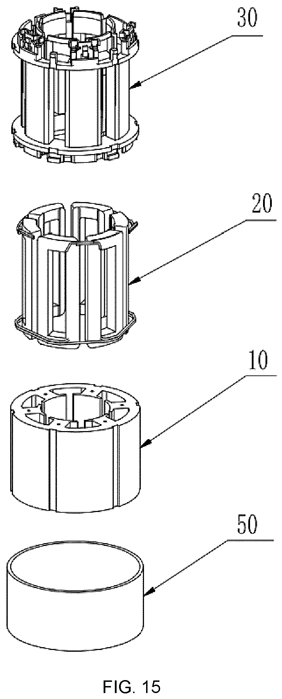

As shown in FIGS. 1 to 15, the electric motor includes a rotor, a stator, an insulating assembly 30, and a coil winding 20. The rotor includes a rotor core and a rotor shaft, the rotor shaft can rotate about a first axis, and the rotor core and the rotor shaft rotate synchronously. The stator includes a stator core 10 disposed around the first axis. The rotor core is disposed in the stator core 10. The stator core 10 includes a core ring 11 and multiple stator teeth 12. The core ring 11 is a circular ring around the first axis. The stator teeth 12 extend inward from the inner wall of the core ring 11 along a radial direction perpendicular to the first axis. The multiple stator teeth 12 are arranged in sequence in a circumferential direction around the first axis. The insulating assembly 30 includes two insulating end covers 31 and a sleeve portion 32 disposed between the two insulating end covers 31. The two insulating end covers 31 are used for covering two ends of the stator teeth 12 along the direction of the first axis, respectively, and the sleeve portion 32 covers the middle part of the stator teeth 12. The insulating end cover 31 includes an annular body 311 and multiple terminal teeth 312. The annular body 311 is a circular ring around the first axis. The multiple terminal teeth 312 extend toward the inner side of the annular body 311 along a radial direction perpendicular to the first axis and are in one-to-one correspondence with the multiple stator teeth 12. Each stator tooth 12 and the corresponding two terminal teeth 312 are continuous along the first axis and abut against each other to form a winding tooth together. The coil winding 20 includes multiple coils, and the multiple coils are wound around multiple winding teeth, respectively.

More specifically, the stator tooth 12 includes a body portion 121 and a pair of extension portions 122, the tip of the extension portion 122 is circumferentially away from the body portion 121 and faces an adjacent stator tooth 12, the terminal tooth 312 includes a tooth surface 3121 and a tooth end 3122, tooth ends 3122 are arranged circumferentially, the coil is wound around the body portion 121 and the tooth surface 3121, and the extension portions 122 and the tooth ends 3122 are used for limiting the coils.

For the power tool, during operation, the electric motor may generate relatively loud noise when rotating at a high speed. One source of the harsh squealing sound is caused by the resonance of the electric motor. Especially for tools such as polishers, the user needs to operate in an environment with as less noise as possible. Therefore, the resonance of the electric motor should be eliminated as much as possible. The principle of electric motor resonance is that when the electric motor rotates at a high speed, the rotor shaft has a rotational frequency f that varies within a preset range, and the preset range may be from a to b, that is, a < f < b. The stator core 10 in the electric motor has a first natural frequency f1. When the rotational frequency f of the rotor shaft during rotation is the same as the first natural frequency f1, the electric motor resonates to generate loud noise, affecting the user operation. In fact, when a positive integer multiple of the rotational frequency f of the rotor shaft during rotation is the same as the first natural frequency f1, the electric motor also resonates, that is, when nf = f1 (n is a positive integer), resonance also occurs.

To reduce the noise of the electric motor, a continuous wall surface is formed on the inner side of the stator core 10. The natural frequency of the stator core 10 on the inner side of which the continuous wall surface exists increases by at least 10% compared with the natural frequency of the stator core 10 on the inner side of which no continuous wall surface exists. The stator core 10 has a second natural frequency f2 after the continuous wall surface is formed on the inner side of the stator core 10. The second natural frequency f2 is at least 10% greater than the first natural frequency f1 before the continuous wall surface is formed on the inner side of the stator core 10. That is, the natural frequency of the stator core 10 is changed by forming the continuous wall surface on the inner side of the stator core 10 so that the frequency at which the electric motor may resonate can be avoided, thereby reducing electric motor noises.

In some examples, the continuous wall surface formed on the inner side of the stator core 10 may be a smooth wall surface or a non-smooth wall surface. In some examples, the continuous wall surface may be understood as that the grooves or notches formed between the extension portions 122 of adjacent stator teeth are closed by fillers 40 or filling members, forming visual or physical continuity. It may also be understood as that the inner side of the stator core 10, that is, the side facing the rotor, is an uninterrupted cylindrical surface or a smooth curved surface, or at least free of physical notches, grooves, or structural fractures.

The electric motor further includes the fillers 40. The filler 40 is disposed at least between adjacent stator teeth 12. The filler 40 and two adjacent stator teeth 12 can form the continuous wall surface.

Referring to FIGS. 1 to 6, in some examples, the gap between the extension portions 122 of two adjacent stator teeth 12 is at least partially filled with the filler 40. For example, the filler 40 may be filled between every pair of adjacent extension portions 122, or the filler 40 may be selectively filled between some pairs of adjacent extension portions 122. The filler 40 may have such a length that the filler 40 completely fills the gap between two adjacent extension portions 122 or fills part of the gap between two adjacent extension portions 122. The filler 40 may have such a thickness that the filler 40 is flush with the extension portion 122 or may be concave outward or convex inward along a radial direction perpendicular to the first axis. The surface of the filler 40 may be smooth or rough.

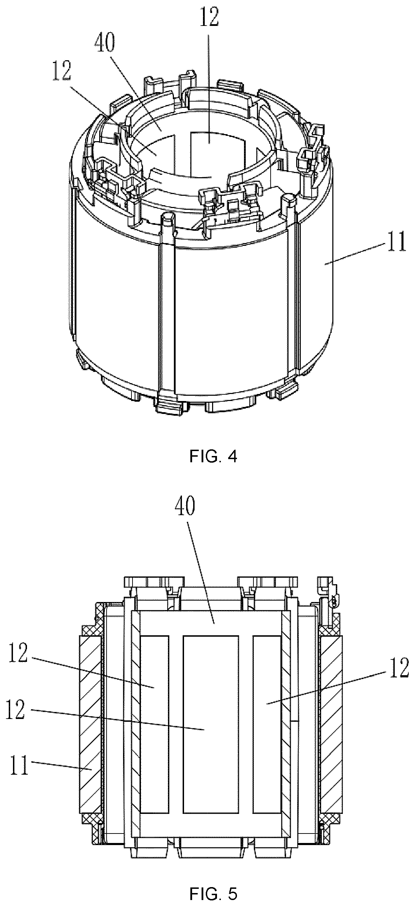

Referring to FIGS. 1 to 3, in some examples, the fillers 40, each of which is filled between two adjacent extension portions 122, are independently provided. For example, the filler 40 is in the form of a strip, and no connection relationship exists between the strips. Referring to FIGS. 4 to 6, in some examples, the fillers 40, each of which is filled between two adjacent extension portions 122, are integrally provided. For example, the filler 40 is in the form of a strip, and the strips are connected into one piece through connectors.

In some examples, the first material forming the insulating end covers 31 and the second material forming the fillers 40 are two different materials. For example, the first material and the second material have different moisture absorption rates, or different moduli, or different densities, or different melt fluidities, or the first material and the second material are composite materials with basically the same components but different contents of the components. In an example, the modulus of the first material is less than the modulus of the second material. In an example, the moisture absorption rate of the first material is greater than the moisture absorption rate of the second material. In an example, the fluidity of the melt second material is less than the fluidity of the melt first material.

In some examples, the filler 40 is a non-metallic material, such as nylon with fiber, the bulk molding compound (BMC), polycarbonate (PC), acrylonitrile butadiene styrene (ABS), or AB glue (two-liquid mixed hardening glue). In some examples, the filler 40 is a metal material, such as the aluminum alloy or steel.

In some examples, the fillers 40 may be formed by injecting the molten material (thermoplastic material such as nylon or thermosetting material such as BMC) into the to-be-filled gaps through a mold. In some examples, the fillers 40 may be formed by pressing strips into the to-be-filled gaps. In some examples, the fillers 40 may be formed by filling glue into the to-be-filled gaps.

In some examples, the electric motor further includes filling members, where the filling members are adjacent to the inner side of the stator core 10. In some examples, the filling members are cylindrical members. In some examples, the filling members are sheet members, and the width of the sheet member is greater than the width of the gap between two adjacent extension portions 122.

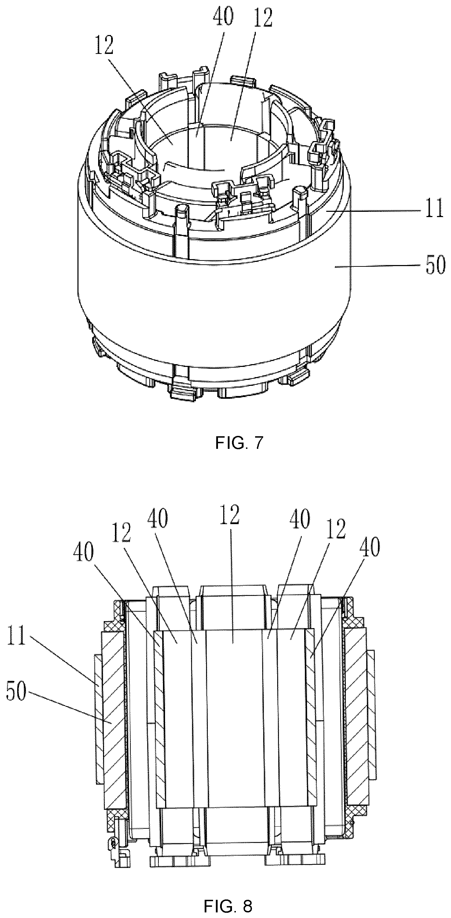

Referring to FIGS. 7 to 15, in some examples, the electric motor further includes a press fitting 50 fixed to the outer circumference of the stator core 10 by interference press-fitting to apply a fastening force to the stator core 10. The press fitting 50 is specifically an annular member with the first axis as the central axis, and the annular member is sleeved on the outer circumference of the core ring 11 of the stator core 10. After being assembled to the outer circumference of the core ring 11 of the stator core 10, the press fitting 50 has an interference fit with the core ring 11 so that it is difficult for the user to remove the press fitting 50 and the stator core 10 without the aid of external auxiliary tools. The press fitting 50 is provided so that the natural frequency of the stator core 10 can be changed, and the frequency at which the electric motor may resonate can be avoided, thereby reducing electric motor noises.

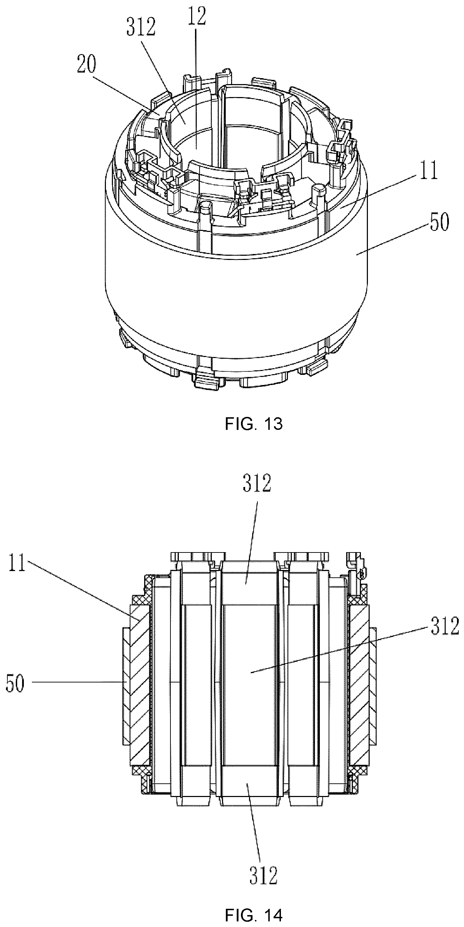

It is to be understood that referring to FIGS. 1 to 6, only the fillers 40 may be provided to change the natural frequency of the stator core 10; referring to FIGS. 7 to 12, the fillers 40 and the press fitting 50 may be provided to change the natural frequency of the stator core 10; referring to FIGS. 13 to 15, only the press fitting 50 may be provided to change the natural frequency of the stator core 10. All of the preceding manners can reduce electric motor noises.

In addition, for the electric motor, the coils of the coil winding 20 need to be arranged tightly during winding. On the one hand, when the number of coil turns remains unchanged, more space can be made available to improve the heat dissipation capacity of the electric motor. On the other hand, when the number of coil turns is not limited, the number of coil turns can be increased as much as possible to improve the slot fill factor.

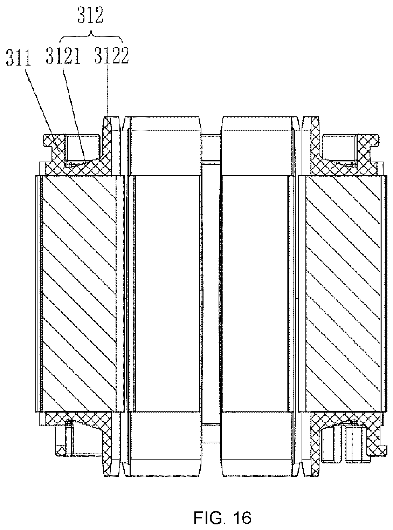

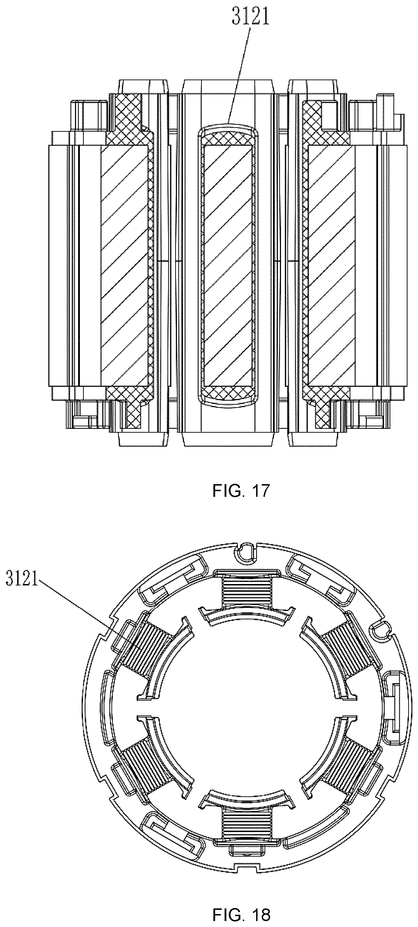

As shown in FIGS. 16 and 17, in some examples, to enable the coils of the coil winding 20 to be arranged tightly during winding, the tooth surface 3121 of the terminal tooth 312 protrudes axially to form at least a partially arc-shaped surface, and at least part of the tooth surface 3121 of the terminal tooth 312 is configured to be an inclined surface along a radial direction. Through the preceding arrangement, the first layer of coils can be better fixed, thereby ensuring that the subsequent coils do not slip. In this manner, the coils of the coil winding 20 can be arranged tightly during winding.

As shown in FIG. 16, a cross-sectional view of the tooth surface 3121 is a view in which the tooth surface 3121 is crossed by a radial plane passing through the terminal tooth 312, and FIG. 17 shows a view in which the tooth surface 3121 in FIG. 16 is crossed by a plane perpendicular to the radial plane. As shown in FIG. 16, the tooth surface 3121 is inclined from the inside to the outside in the radial direction, and as shown in FIG. 17, the tooth surface 3121 first extends upward and then extends downward in a circumferential direction so that the tooth surface 3121 forms a convex surface in an axial direction.

In some examples, the height of the protrusion of the arc-shaped surface is greater than or equal to 0.2 mm.

In some examples, the angle of inclination of the inclined surface is greater than or equal to 2° and less than or equal to 45°.

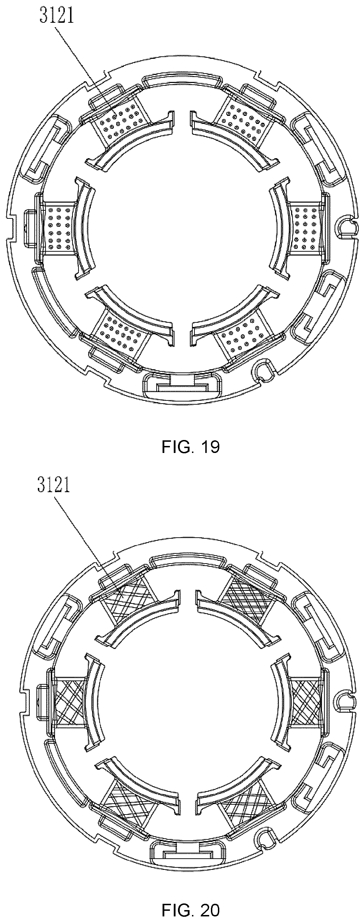

Furthermore, at least part of the tooth surface 3121 of the terminal tooth 312 is configured to be a rough surface to further improve the fixing effect of the first layer of coils. In some examples, as shown in FIG. 18, the rough surface includes a groove with a grooving direction consistent with a coil winding direction. In some examples, as shown in FIG. 19, the rough surface includes multiple regular or irregular protrusions. In some examples, as shown in FIG. 20, the rough surface includes a mesh-like groove. In some examples, the rough surface includes multiple ridges extending in a direction basically consistent with the coil winding direction.

In some examples, the roughness Ra of the rough surface is less than or equal to 3.2 µm.

As shown in FIG. 16, or in some examples, to enable the coils of the coil winding 20 to be arranged tightly during winding, at least part of the tooth surface 3121 of the terminal tooth 312 is configured to be an inclined surface along a radial direction, and the roughness Ra of the tooth surface 3121 is less than or equal to 3.2 µm. Through the preceding arrangement, the first layer of coils can also be better fixed, thereby ensuring that the subsequent coils do not slip. In this manner, the coils of the coil winding 20 can be arranged tightly during winding.

In some examples, the angle of inclination of the inclined surface is greater than or equal to 2° and less than or equal to 45°.

In some examples, as shown in FIG. 18, the rough surface includes a groove with a grooving direction consistent with a coil winding direction. In some examples, as shown in FIG. 19, the rough surface includes multiple regular or irregular protrusions. In some examples, as shown in FIG. 20, the rough surface includes a mesh-like groove. In some examples, the rough surface includes multiple ridges extending in a direction basically consistent with the coil winding direction.

Alternatively, in some examples, to enable the coils of the coil winding 20 to be arranged tightly during winding, the roughness Ra of the tooth surface 3121 of the terminal tooth 312 is greater than 3.2 µm. Through the preceding arrangement, even if the tooth surface 3121 is not inclined, the first layer of coils can also be better fixed, thereby ensuring that the subsequent coils do not slip. In this manner, the coils of the coil winding 20 can be arranged tightly during winding.

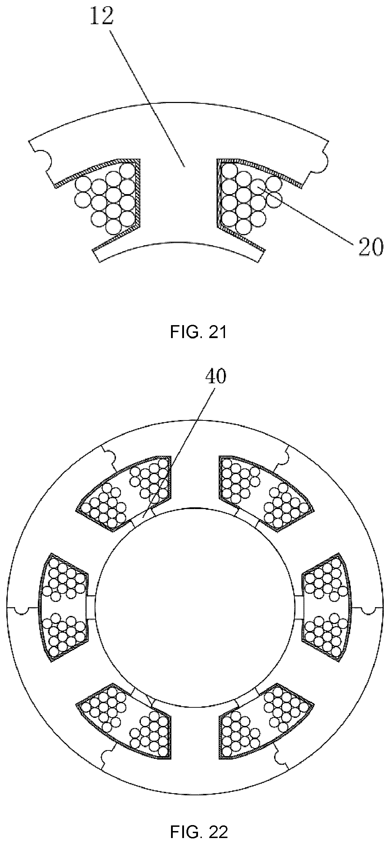

In some examples, the electric motor may also include a segmented stator motor. As shown in FIGS. 21 and 22, the stator core 10 of the electric motor is divided into multiple segments, the coils of the coil winding 20 are wound around the segments of the core, respectively, and the segments of the core are spliced together to form an assembled core. To reduce the noise of the segmented stator motor or to ensure the splicing firmness of the segments of the core, for the spliced core ring, the fillers 40 may be applied to the gaps between the spliced stator teeth through various processes such as injection molding, press fitting, or glue filling. For the filling material and filling form of the fillers 40, reference may be made to the introduction of the preceding examples. The details are not repeated here.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric motor, comprising:
a rotor comprising a rotor core;
a stator comprising a stator core (10), wherein the stator core (10) comprises a core ring (11) and a plurality of stator teeth (12) extending radially toward an inner side of the core ring (11); and
insulating end covers (31) disposed at two ends of the stator core (10), wherein an insulating end cover (31) of the insulating end covers (31) comprises an annular body (311) and a plurality of terminal teeth (312), the plurality of terminal teeth (312) extend radially toward an inner side of the annular body (311), and a terminal tooth (312) of the plurality of terminal teeth (312) has a tooth surface (3121) around which a coil is wound;
wherein the tooth surface (3121) protrudes axially to form at least a partially arc-shaped surface, and at least part of the tooth surface (3121) is configured to be an inclined surface along a radial direction.

2. The electric motor of claim 1, wherein at least part of the tooth surface (3121) is configured to be a rough surface.

3. The electric motor of claim 2, wherein the rough surface comprises at least one of a groove with a grooving direction consistent with a coil winding direction, a plurality of regular or irregular protrusions, a mesh-like groove, and a plurality of ridges extending in a direction basically consistent with the coil winding direction.

4. The electric motor of claim 2, wherein roughness Ra of the rough surface is less than or equal to 3.2 µm.

5. The electric motor of claim 1, wherein a height of a protrusion of the arc-shaped surface is greater than or equal to 0.2 mm.

6. The electric motor of claim 1, wherein an angle of inclination of the inclined surface is greater than or equal to 2° and less than or equal to 45°.

7. A power tool, comprising:
a housing;
an electric motor disposed in the housing; and
a working portion configured to be driven by the electric motor;
wherein the electric motor comprises:
a rotor comprising a rotor core;
a stator comprising a stator core (10), wherein the stator core (10) comprises a core ring (11) and a plurality of stator teeth (12) extending radially toward an inner side of the core ring (11); and
insulating end covers (31) disposed at two ends of the stator core (10), wherein an insulating end cover (31) of the insulating end covers (31) comprises an annular body (311) and a plurality of terminal teeth (312), the plurality of terminal teeth (312) extend radially toward an inner side of the annular body (311), and a terminal tooth (312) of the plurality of terminal teeth (312) has a tooth surface (3121) around which a coil is wound;
wherein the tooth surface (3121) protrudes axially to form at least a partially arc-shaped surface, and at least part of the tooth surface (3121) is configured to be an inclined surface along a radial direction.

8. The electric motor of claim 7, wherein at least part of the tooth surface (3121) is configured to be a rough surface.

9. The electric motor of claim 8, wherein the rough surface comprises at least one of a groove with a grooving direction consistent with a coil winding direction, a plurality of regular or irregular protrusions, a mesh-like groove, and a plurality of ridges extending in a direction basically consistent with the coil winding direction.

10. The electric motor of claim 8, wherein roughness Ra of the rough surface is less than or equal to 3.2 µm.

11. The electric motor of claim 7, wherein a height of a protrusion of the arc-shaped surface is greater than or equal to 0.2 mm.

12. The electric motor of claim 7, wherein an angle of inclination of the inclined surface is greater than or equal to 2° and less than or equal to 45°.

## Amended claims

### Amended claims in accordance with Rule 137(2) EPC.

1. An electric motor, comprising:
a rotor comprising a rotor core;
a stator comprising a stator core (10), wherein the stator core (10) comprises a core ring (11) and a plurality of stator teeth (12) extending radially toward an inner side of the core ring (11); and
insulating end covers (31) disposed at two ends of the stator core (10), wherein an insulating end cover (31) of the insulating end covers (31) comprises an annular body (311) and a plurality of terminal teeth (312), the plurality of terminal teeth (312) extend radially toward an inner side of the annular body (311), and a terminal tooth (312) of the plurality of terminal teeth (312) has a tooth surface (3121) around which a coil is wound;
wherein at least part of the tooth surface (3121) is configured to be an inclined surface along a radial direction;
**characterized in that**
the tooth surface (3121) protrudes axially to form at least a partially arc-shaped surface.

2. The electric motor of claim 1, wherein at least part of the tooth surface (3121) is configured to be a rough surface.

3. The electric motor of claim 2, wherein the rough surface comprises at least one of a groove with a grooving direction consistent with a coil winding direction, a plurality of regular or irregular protrusions, a mesh-like groove, and a plurality of ridges extending in a direction basically consistent with the coil winding direction.

4. The electric motor of claim 2, wherein roughness Ra of the rough surface is less than or equal to 3.2 µm.

5. The electric motor of claim 1, wherein a height of a protrusion of the arc-shaped surface is greater than or equal to 0.2 mm.

6. The electric motor of claim 1, wherein an angle of inclination of the inclined surface is greater than or equal to 2° and less than or equal to 45°.

7. A power tool, comprising:
a housing;
an electric motor according to any of claims 1 to 6, the electric motor disposed in the housing; and
a working portion configured to be driven by the electric motor.

8. The electric motor of claim 7, wherein at least part of the tooth surface (3121) is configured to be a rough surface.

9. The electric motor of claim 8, wherein the rough surface comprises at least one of a groove with a grooving direction consistent with a coil winding direction, a plurality of regular or irregular protrusions, a mesh-like groove, and a plurality of ridges extending in a direction basically consistent with the coil winding direction.

10. The electric motor of claim 8, wherein roughness Ra of the rough surface is less than or equal to 3.2 µm.

11. The electric motor of claim 7, wherein a height of a protrusion of the arc-shaped surface is greater than or equal to 0.2 mm.

12. The electric motor of claim 7, wherein an angle of inclination of the inclined surface is greater than or equal to 2° and less than or equal to 45°.
